# EUROPÄISCHE PATENTSCHRIFT

(11) **EP 2 446 175 B1**
(45) Veröffentlichungstag und Bekanntmachung des Hinweises auf die Patenterteilung: **13.06.2018**
(21) Anmeldenummer: 10725799.0
(22) Anmeldetag: 25.06.2010
(51) Int. Cl.: F16J 15/08

(54) **FLACHDICHTUNG MIT EINER VOLLSICKE**
FLAT SEAL HAVING A SOLID BEAD
JOINT D'ÉTANCHÉITÉ PLAT DOTÉ D'UNE MOULURE PLEINE

(30) Priorität: 25.06.2009 DE 102009030559
(43) Veröffentlichungstag der Anmeldung: 02.05.2012
(73) Patentinhaber: Federal-Mogul Sealing Systems GmbH, 57562 Herdorf (DE)
(72) Erfinder: SCHMITT, Klaus, 57520 Grünebach (DE); SCHNEIDER, Burkhard, 57290 Neunkirchen (DE)
(74) Vertreter: Becker Kurig Straus
(86) Internationale Anmeldenummer: PCT/EP2010/059074
(87) Internationale Veröffentlichungsnummer: WO 2010/149774

(56) Entgegenhaltungen:
- EP-A1- 1 637 780
- EP-A1- 1 693 606
- DE-A1-102004 034 824
- DE-T2-602004 011 452
- JP-U- H0 160 072
- US-A- 4 861 047

## Beschreibung

Die vorliegende Erfindung betrifft metallische Flachdichtungen mit Vollsicken. Weiterhin betrifft die vorliegende Erfindung Dichtungen mit Dichtsicken, die gegen Verpressung geschützt sind. Weiterhin betrifft die vorliegende Erfindung metallische Zylinderkopfdichtungen.

Aus dem Stand der Technik sind verschiedene Flachdichtungen mit und ohne Stopper bekannt.

Dokument DE 10219526 A1 betrifft eine Metalldichtung mit einer Stopperlage, die als eine schachbrettartige Prägung in einer Lage der Metalldichtung ausgeführt ist.

Dokument US 2004/0160017 A1 betrifft eine Metalldichtung mit einer Stopperlage, die als eine wabenförmige Prägung in einer Lage der Metalldichtung ausgeführt ist.

Die Offenlegungsschrift DE 10 2004 061 964 A1 betrifft eine Dichtung mit einer Stopperlage, die ringsegmentartig ausgeführt ist, wobei die einzelnen Ringsegmente als gesonderte Lagen ausgeführt sind.

Aus dem Dokument DE 102 006 047 424 ist ein wellenförmiger Verformungsbegrenzer bekannt, der als wellenförmige Einprägung in einer Metalllage ausgeführt ist.

Aus dem Dokument DE 20 121 984 ist ein wellenförmiger Verformungsbegrenzer bekannt, der als wellenförmige Einprägung in einer Metalllage ausgeführt ist und der in diesem Dokument auch als "wellenförmiger Stopper" bezeichnet wird.

Bisher wurden die wellenförmigen Stopper unter anderem als Sicken ausgeführt, die kreisförmig um einen Dichtbereich d. h. eine Vollsicke herum oder innerhalb einer Vollsicke angeordnet sind. Diese Sicken bildeten bisher geschlossenen Kreise oder Schleifen, wobei herkömmliche Sicken nur in einer Dimension, nämlich senkrecht zum Verlauf der Sicke eine Verpressungswirkung aufbauen können.

Dokument EP 1637780 A1 betrifft eine Dichtung mit einer Sicke, welche eine Wellenform aufweist, die der Verformungsbegrenzung dient.

Der vorliegenden Erfindung liegt die Aufgabe zugrunde, die Verpressungseigenschaften von Dichtbereichen, die als Vollsicken ausgeführt sind, zu verbessern.

Es ist weiterhin wünschenswert, das Material, aus dem der wellenförmige Stopper gefertigt ist, dünner auszuführen, ohne die Eigenschaften der Dichtung zu verschlechtern. Es ist zudem wünschenswert, die Herstellungskosten für ein Werkzeug, mit dem eine erfindungsgemäße Dichtung hergestellt werden kann, zu senken.
In einer Ausführungsform der vorliegenden Erfindung wird eine metallische Flachdichtung mit mindestens einer Lage und einer Vollsicke gemäß Anspruch 1 bereitgestellt. Die metallische Dichtung umfasst dabei mindestens eine Vollsicke, die in mindestens einer Lage der metallischen Dichtung ausgebildet ist. Die Vollsicke umfasst zwei einander gegenüberliegende Flanken. Zwischen den zwei Flanken der Vollsicke umfasst die Dichtung in Umfangsrichtung der Vollsicke mindestens eine Reihe benachbarter Sickenabschnitte bzw. Vertiefungen, die jeweils mit der Vollsicke eine einstückige Kontur bilden und gegenüber der Vollsicke entgegengesetzt ausgerichtet sind.
Die Reihe benachbarter Sickenabschnitte bzw. Vertiefungen sind entgegengesetzt zu der Vollsicke gerichtet und können die Vollsicke abstützen, sodass ein vollständiges Plattdrücken der Vollsicke verhindert werden kann. Die Reihe von benachbarten Vertiefungen bzw. Sickenabschnitten verläuft dabei zumindest teilweise bzw. größtenteils, parallel zu der Vollsicke. Die Vertiefungen bilden quasi "Gegensicken" zu der Vollsicke. Die Vertiefungen sind entgegengesetzt zu der Vollsicke gerichtet und in die metallische Lage eingeprägt. Die Reihe benachbarter Vertiefungen sind entgegengesetzt zu der Vollsicke gerichtet und können die Verpressung der Vollsicke begrenzen, indem die Vertiefungen den Rücken der Vollsicke in Richtung der Einbuchtung der Vollsicke abstützen. Der Ausdruck "Vertiefung" soll eine Einwölbung bezeichnen, die sich auf der anderen Seite der Lage auswölbt, und nicht lediglich eine Einprägung darstellt, die nur einer Verdünnung der Lage entsprechen würde. Insbesondere sollte der Ausdruck "Vertiefung" eine Verformung des Blechs bezeichnen, die in einem Querschnitt im Wesentlichen dem Querschnitt einer Vollsicke entspricht. Die Vertiefungen können daher beispielsweise als Sickenabschnitte oder auch Punktsicken ausgeführt sein. Gemäß der vorliegenden Erfindung weist die Dichtung zwei benachbarte, parallel verlaufende Reihen von Vertiefungen auf.

In einem nicht zur Erfindung gehörenden Beispiel sind die Vertiefungen auf benachbarten Reihen parallel zueinander, und nicht zueinander versetzt angeordnet. Durch nicht gegeneinander versetzt angeordnete Vertiefungen können die Kosten für die Herstellung eines Presswerkzeuges gesenkt werden.

Die Vertiefungen auf benachbarten Reihen können auch unabhängig voneinander entlang der Reihen angeordnet sein. Gemäß der vorliegenden Erfindung sind die Vertiefungen auf benachbarten Reihen zueinander versetzt angeordnet, was ein gleichmäßigeres Abstützen der Vollsicke ermöglicht.
In einer weiteren Ausführungsform der vorliegenden Erfindung weist die Dichtung drei benachbarte, parallel verlaufende Reihen von Vertiefungen auf.
In einer weiteren Ausführungsform der vorliegenden Erfindung umfasst die Dichtung vier benachbarte, parallel verlaufende Reihen von Vertiefungen. Gemäß der vorliegenden Erfindung verlaufen die Vollsicke und die Reihen von Vertiefungen zumindest teilweise auf Kreisbögen. Es ist ebenfalls vorgesehen, dass die Vollsicke und die Reihen von Vertiefungen konzentrische Kreise bilden, oder auf konzentrischen Kreisbögen liegen.
In einer zusätzlichen Ausführungsform weisen die, auf einem Kreisbogen angeordneten Vertiefungen im Wesentlichen eine Länge auf, die einem Mittelpunktswinkel zwischen 2° und 4° entspricht. Das heißt, dass auf einem Vollkreis zwischen etwa 50 und 180 Vertiefungen angeordnet sein können. Bevorzugt können die Vertiefungen, die beispielsweise als Sickenabschnitte ausgeführt werden können, in der Länge in etwa doppelt bis achtmal, vorzugsweise drei- bis sechsmal und weiter bevorzugt vier- bis fünfmal so lang ausgeführt sein wie ihre Breite.

In einem anderen nicht zur Erfindung gehörenden Beispiel der metallischen Flachdichtung weisen die Vertiefungen einer Reihe von Vertiefungen im Wesentlichen die gleiche Breite und die gleiche Länge auf.

In einem nicht zur Erfindung gehörenden anderen Beispiel der metallischen Flachdichtung weisen mindestens zwei benachbarte Reihen von Vertiefungen die gleiche Anzahl von Vertiefungen auf.

In einem anderen nicht zur Erfindung gehörenden Beispiel weisen die Flanken zumindest einiger Vertiefungen, bzw. die Lage im Bereich der Flanken zumindest einiger Vertiefungen, im Wesentlichen die gleiche Dicke auf wie die metallische Lage. Gemäß diesem Beispiel soll die Dicke der Lage im Bereich der Vertiefungen im Wesentlichen konstant gehalten werden. Gemäß einem weiteren nicht zur Erfindung gehörenden Beispiel soll die Dicke der Lage im Bereich der Flanken der Vollsicke im Wesentlichen gleich der Dicke der metallischen Lage sein.
Gemäß einer anderen Ausführungsform sind die Vertiefungen im Querschnitt wellenförmig bzw. in Form jeweils einer runden Welle ausgeführt.
In einer weiteren Ausführungsform der metallischen Flachdichtung sind zumindest einige der Vertiefungen im Bereich ihrer Flanken im Vergleich zu der Dicke der metallischen Lage verjüngt.
Gemäß dieser Ausführungsform soll die Dicke der Lage im Bereich der Vertiefungen verjüngt sein. Gemäß einer Ausführungsform soll die Dicke der Lage im Bereich der Flanken der Vollsicke im Wesentlichen verjüngt werden und damit unterhalb der Dicke der Lage liegen.
Gemäß einer weiteren Ausführungsform sind die Vertiefungen im Querschnitt trapezförmig. Bei trapezförmigen Sicken kann eine Verjüngung der Flanken der Vollsicke und/oder der Vertiefungen durch ein scherendes Prägen erzielt werden.
Durch Verändern der Verjüngung der Flanken der Vollsicke und /oder der Vertiefungen können die Eigenschaften entsprechend den Anforderungen des Einsatzes der Flachdichtung angepasst werden.
Gemäß einer weiteren Ausführungsform der metallischen Flachdichtung umfasst diese mindestens eine Durchgangsöffnung, wie eine Brennraumöffnung, die von der Vollsicke und der mindestens einen Reihe von Vertiefungen umschlossen ist.
Es ist ebenfalls vorgesehen, die Flachdichtung zur Abdichtung eines fluidgefüllten Raums wie Öl oder Gas bzw. Vakuum zu verwenden. Die Durchgangsöffnung ist zur erfinderischen Wirkung der erfindungsgemäßen Dichtung nicht notwendig, da eine Dichtung auch nur als Verschluss einer Öffnung dienen kann. In diesem Fall kann eine Dichtung ohne Durchgangsöffnung ggf. besser dichten, da nur eine einzige Dichtfläche abgedichtet werden muss.
In einer zusätzlichen beispielhaften Ausführungsform umfasst die metallische Flachdichtung weiter mindestens eine zusätzliche Reihe von Vertiefungen, die nicht zwischen den Flanken einer Vollsicke angeordnet ist. In diesen Bereichen sind mehrere hintereinander und nebeneinander angeordnete Vertiefungen entlang mehrerer, im Wesentlichen parallel verlaufender Linien angeordnet. Die Vertiefungen auf benachbarten Linien können jeweils gegeneinander versetzt angeordnet sein. Die Vertiefungen auf benachbarten Linien können jeweils parallel bzw. nicht gegeneinander versetzt angeordnet sein. Dadurch können die einzelnen Vertiefungen eine Fläche auf einer Lage der metallischen Flachdichtung füllen, die im Prinzip beliebig geformt sein kann. In einem weiteren nicht zur Erfindung gehörenden Beispiel können die einzelnen Vertiefungen gerade ausgeführt und tangential entlang einer Kurve oder eines Kreisbogens angeordnet sein.

In einem weiteren nicht zur Erfindung gehörenden Beispiel der metallischen Flachdichtung sind auf einer ersten Reihe von Vertiefungen, die entlang eines ersten Kreisbogens verläuft in mindestens einem vorbestimmten Kreissektor keine Vertiefungen angeordnet. Zusätzlich sind bei diesem Beispiel auf einer zweiten Reihe von Vertiefungen, die entlang eines zweiten, konzentrischen Kreisbogens mit einem anderen Radius als der erste Kreisbogen verläuft, in mindestens einem zweiten Kreissektor Vertiefungen angeordnet, indem auf dem ersten Kreisbogen keine Vertiefungen angeordnet sind. Weiterhin sind bei diesem Beispiel auf der zweiten Reihe von Vertiefungen, die auf dem zweiten konzentrischen Kreisbogen liegen, in mindestens einem Kreissektor keine Vertiefungen angeordnet, während in diesem Sektor auf dem ersten Kreisbogen Vertiefungen angeordnet sind. Dieses Beispiel ist geeignet durch mehrere, nur sektorweise verlaufende Kreisbogenabschnitte beispielsweise Brennraumausbuchtungen und entsprechende Ausbuchtungen der Vollsicke Abweichungen von der Kreisform auszugleichen. Dies kann erreicht werden, indem in dem Bereich, in dem beispielsweise ein Kreis aus aneinander gereihten Vertiefungen durch eine Brennraumausbuchtung unterbrochen ist, ein zusätzlicher Kreisbogen vorgesehen wird, der im Sektor der Unterbrechung verläuft, die Breite der Vollsicke mit Vertiefungen gleichmäßig aufgefüllt ist. Dabei können die Vertiefungen an jede Form bzw. an jeden Verlauf einer Vollsicke angepasst werden.

In einem weiteren nicht zur Erfindung gehörenden Beispiel ist die Durchgangsöffnung mit Ausbuchtungen versehen und die Vollsicke verläuft um diese Ausbuchtung herum. In dieser Ausführungsform ist mindestens ein Kreisbogen mit einer darauf angeordneten Reihe von Vertiefungen im Bereich der Ausbuchtung der Vollsicke an der (mindestens einen) Einbuchtung unterbrochen. Dieser (mindestens eine) fehlende Kreisbogen und die in diesem Bereich fehlenden Vertiefungen werden dabei durch (mindestens eine) außen an einer äußeren Ausbuchtung der Vollsicke zusätzlich in der Vollsicke angeordnete, auf einem Kreisbogen liegende Reihe von Vertiefungen ausgeglichen. Somit wird verhindert, dass die Wirkung der Vertiefungen durch schmalere Bereiche in seiner Funktion geschwächt ist.

Es ist ebenfalls vorgesehen, die Höhe, die Breite und die Länge der Vertiefungen innerhalb einer Reihe oder zwischen benachbarten Reihen zu variieren, um beispielsweise Belastungsspitzen an der Flanke der Vollsicke zu vermeiden.

In einer weiteren beispielhaften Ausführungsform sind die Vertiefungen als Punktsicke bzw. Beule, Y-, X, V, Kreuz-, Stern oder Drei-, Vier-, Fünf- oder Sechseckvertiefungen oder Ringsicke ausgeführt sind.

In einer weiteren Ausführungsform der ist die metallische Flachdichtung eine Zylinderkopfdichtung für einen Verbrennungsmotor.

Gemäß einem anderen Aspekt der vorliegenden Erfindung wird ein Präge-/Press-Werkzeug zur Herstellung einer metallische Flachdichtung wie sie vorstehend beschrieben bereitgestellt. Das erfindungsgemäße Präge/Presswerkzeug ist dabei so ausgeführt, dass es mindestens eine Lage einer erfindungsgemäßen Flachdichtung mit einer Vollsicke und mit mindestens einer Reihe von Vertiefungen versehen kann, wie er vorstehend beschrieben ist. Vorzugsweise ist das Werkzeug ebenfalls mit Strukturen versehen, die Durchgangslöcher ausstanzen, und weitere Dichtsicken in Lagen einer metallischen Flachdichtung drücken, pressen oder prägen können.

In der Zeichnung wird die Erfindung anhand von verschiedenen Ausführungsformen von erfindungsgemäßen Metalldichtungen gegenüber dem Stand der Technik dargestellt.
Figur 1 zeigt einen Ausschnitt einer Ausführungsform einer herkömmlichen Zylinderkopfdichtung mit einem Stopper und einem Dichtbereich, wie sie aus dem Stand der Technik bekannt ist.
Figur 2 zeigt einen Ausschnitt einer erfindungsgemäßen Flachdichtung mit einer Vollsicke, die von zwei Reihen von Vertiefungen, die als Sickenabschnitte ausgeführt sind, abgestützt wird.
Figuren 3A, 3A' 3B, 3C und 3D zeigen verschiedene Ansichten einer Ausführungsform einer erfindungsgemäßen Dichtung mit einer Vollsicke, die von zwei Reihen von, als Sickenabschnitten ausgeführten, Vertiefungen abgestützt wird.
Figuren 4A bis 4D zeigen verschiedene Ansichten einer anderen Ausführungsform einer erfindungsgemäßen Dichtung mit einer Vollsicke, die von zwei Reihen von als Sickenabschnitte ausgeführten Vertiefungen abgestützt wird.
Figur 5 zeigt eine Aufsicht auf einen Ausschnitt einer erfindungsgemäßen Flachdichtung mit einer Vollsicke, die von drei Reihen von als Sickenabschnitte ausgeführten Vertiefungen abgestützt wird.
Figur 6 zeigt eine Ausführungsform einer erfindungsgemäßen Dichtung, mit einer Brennraumausbuchtung mit einer Ausbuchtung der Vollsicke und einer Anordnung von Sickenabschnitten, die die Ausbuchtung der Vollsicke ausgleicht.
Figuren 7A bis 7C zeigten Ausführungsform einer erfindungsgemäßen Dichtung, mit einer Anordnung von Vertiefungen in Form von Sickenabschnitten versehen ist, die eine Vollsicke abstützen.
Figuren 8A bis 8D zeigen verschiedene mögliche Ausführungsformen und Anordnungen von Vertiefungen in einer Ausführungsform der vorliegenden Erfindung.
Figuren 9A und 9B zeigen Ausführungsformen einer erfindungsgemäßen Dichtung, bei der die Vertiefungen als unterschiedlich breite bzw. unterschiedlich hohe Sickenabschnitte ausgeführt sind.
Figuren 10A und 10B zeigen Ausführungsformen einer erfindungsgemäßen Dichtung, die zusätzlich mit Vertiefungen im "Hinterland" einer Brennraumöffnung versehen ist, um eine Verpressung der Dichtung auch abseits eines Brennraums bzw. einer einen Brennraum abdichtenden Sicke zu begrenzen.

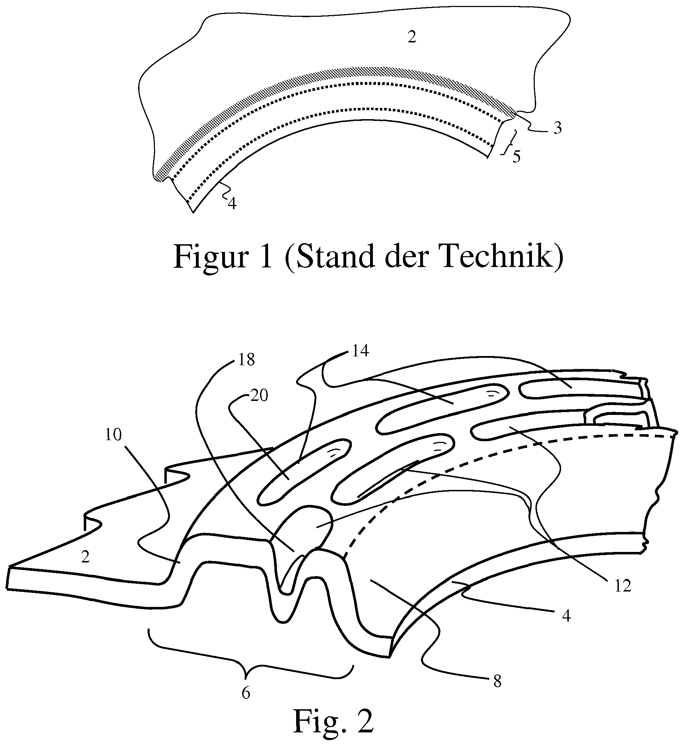

In Figur 1 ist ein Ausschnitt einer herkömmlichen Flachdichtung (Zylinderkopfdichtung) mit einem Dichtbereich 3 und einem Verpressungsbegrenzer oder Stopper 5 für einen Verbrennungsmotor dargestellt. Der Stopper 5 und der Dichtbereich 3 sind um einen Brennraum mit einer Brennraumöffnungskante 4 herumgeführt und bilden jeweils einen Kreis, was die Herstellung des Werkzeugs vereinfacht, da das Werkzeug auf einer Drehmaschine gefertigt werden kann.

In Figur 2 ist ein Ausschnitt einer erfindungsgemäßen Flachdichtung (Zylinderkopfdichtung) mit einer Lage 2 und einem als Vollsicke 6 ausgeführten Dichtelement. Die Vollsicke 6 verläuft mit einer Brennraumöffnungskante 4 um eine Brennraumöffnung herum. Die Vollsicke 6 umfasst eine innere Flanke 8 und eine äußere Flanke 10. Zwischen den Flanken 8, 10 sind auf der Sicke zwei Reihen 12, 14 von als Sickenabschnitte ausgeführten Vertiefungen 18, 20 dargestellt, welche die Vollsicke 6 zusätzlich zu den Flanken 8, 10 der Vollsicke 6 abstützen. Die Vertiefungen 18, 20 können dabei nicht zum Abdichten beitragen, da Bereiche zwischen den Vertiefungen einen Fluiddurchgang gestatten. Die einzelnen Vertiefungen 18, 20 sind in den Reihen 12, 14 zueinander versetzt angeordnet.

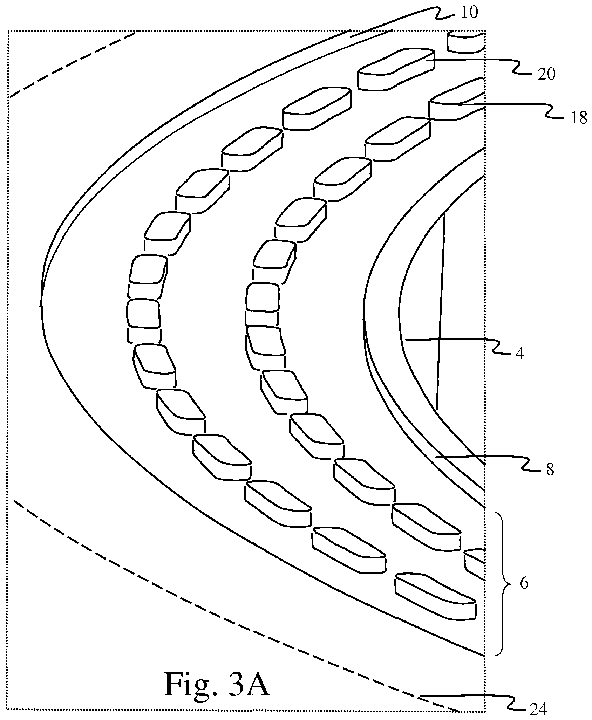

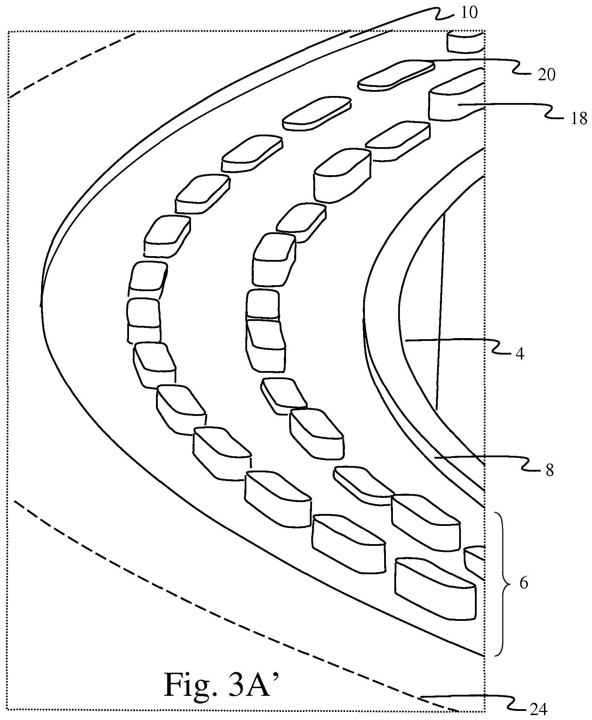

Figur 3A zeigt einen Ausschnitt einer erfindungsgemäßen Zylinderkopfdichtung für einen Verbrennungsmotor in einer perspektivischen Aufsicht. Die Vollsicke weist in Figur 3A nach unten und ist zwischen der äußeren Flanke 10 und der inneren Flanke 8 der Vollsicke 6 als Vertiefung zu erkennen. Die als Sickenabschnitte ausgeführten Vertiefungen 18 und 20 bilden jeweils eine innere Reihe von Vertiefungen 18 und eine äußere Reihe von Vertiefungen 20, deren Rückseiten sich am Grund der Sicke nach oben erheben. Das Bezugszeichen 24 deutet eine mögliche Begrenzung der Dichtung oder eines Dichtbereichs der Dichtung an. Innerhalb der Vollsicke 6 verläuft eine Brennraumöffnungskante 4 um eine Brennraumöffnung.

Figur 3A' zeigt im Wesentlichen den Ausschnitt einer erfindungsgemäßen Zylinderkopfdichtung von Fig. 3A, mit der Vollsicke, die nach unten weist und die zwischen der äußeren Flanke 10 und der inneren Flanke 8 der Vollsicke 6 als Vertiefung zu erkennen ist. Wie in Figur 3A bilden die als Sickenabschnitte ausgeführten Vertiefungen 18 und 20 jeweils eine innere Reihe von Vertiefungen 18 und eine äußere Reihe von Vertiefungen 20, deren Rückseiten am Grund der Sicke sich als Auswölbungen nach oben erheben. Das Bezugszeichen 24 deutet ebenfalls eine mögliche Begrenzung der Dichtung oder eines Dichtbereichs der Dichtung an. Innerhalb der Vollsicke 6 verläuft eine Brennraumöffnungskante 4 um eine Brennraumöffnung.

Im Gegensatz zu Figur 3A sind in Figur 3A' die Vertiefungen (bzw. die dargestellten zugehörigen Erhebungen auf der Rückseite der Dichtung) der äußeren Reihe 20 in der Höhe variiert, von kleinen Erhebungen am oberen Bildrand bis zu stärkeren Vertiefungen am unteren Bildrand. Die Vertiefungen (bzw. die dargestellten zugehörigen Erhebungen auf der Rückseite der Dichtung) der innen Reihe 18 sind ebenfalls mit einer Höhenvariation dargestellt, wobei sich in der inneren Reihe jeweils eine hohe Vertiefung (bzw. Erhebung) 18 mit einer flachen Vertiefung (bzw. Erhebung) abwechselt. Es sollte klar sein, das diese beiden Prinzipien auf jede Reihe von Vertiefungen der anderen in der Zeichnung dargestellten Ausführungsformen angewendet werden kann. Es ist insbesondere vorgesehen, die Vertiefungen auf unterschiedlichen Reihen unterschiedlich hoch bzw. flach bzw. tief auszuführen.

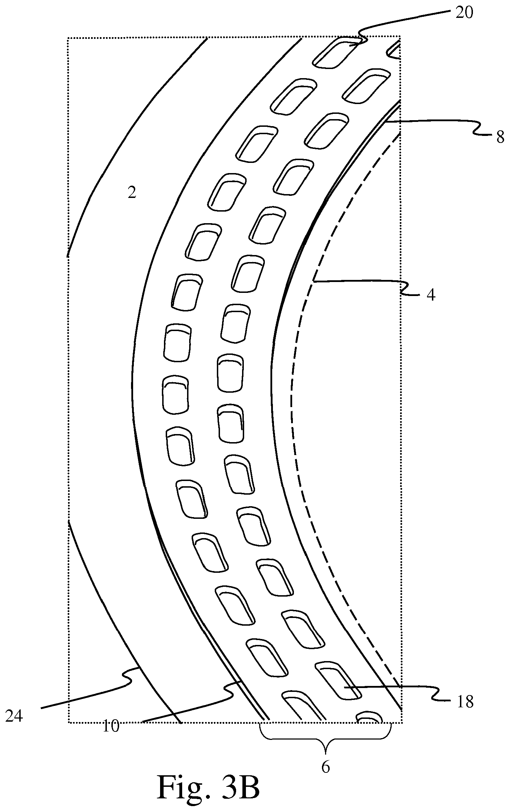

Figur 3B zeigt einen Ausschnitt der Dichtung von Figur 3A von der anderen Seite. Die Vollsicke 6 ist in der Lage 2 angeordnet. In Figur 3B weist die Vollsicke 6 nach oben und ist zwischen der äußeren Flanke 10 und der inneren Flanke 8 der Vollsicke 6 als Erhöhung zu erkennen. Die als Sickenabschnitte ausgeführten Vertiefungen 18 und 20 bilden jeweils eine innere Reihe von Vertiefungen 18 und eine äußere Reihe von Vertiefungen 20, die auf dem Rücken der Sicke als Vertiefungen zu erkennen sind. Das Bezugszeichen 24 deutet eine mögliche Begrenzung der Dichtung oder eines Dichtbereichs der Dichtung an. Innerhalb der Vollsicke 6 verläuft eine Brennraumöffnungskante 4 um eine Brennraumöffnung.

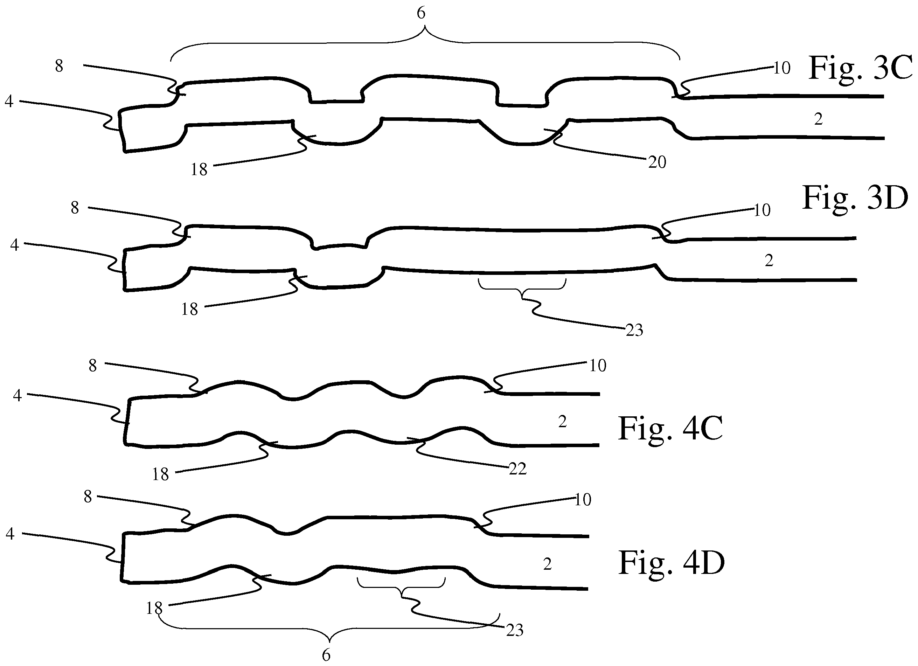

Figur 3C ist eine Schnittansicht durch die Lage 2 der Vollsicke 6 von Figuren 3A und 3B. Die Vollsicke 6 ist in der metallischen Lage 2 mit der äußeren Flanke 10 und der inneren Flanke 8 zu erkennen. Der Schnitt verläuft von der Brennraumöffnungskante 4, die eine Brennraumöffnung umgibt, radial zu der Brennraumöffnung durch einen Bereich in dem sich eine innere Vertiefung 18 mit einer äußeren Vertiefung 20 überlappt.

Figur 3D ist eine Schnittansicht durch die Lage 2 der Vollsicke 6 von Figuren 3A und 3B. Die Vollsicke 6 ist in der metallischen Lage 2 mit der äußeren Flanke 10 und der inneren Flanke 8 zu erkennen. Der Schnitt verläuft von der Brennraumöffnungskante 4, die eine Brennraumöffnung umgibt, radial zu der Brennraumöffnung durch einen Bereich in dem sich eine innere Vertiefung 18 erstreckt und in einem Bereich 23 zwischen zwei äußeren Vertiefungen 20, die folglich nicht zu erkennen sind.

Die Vollsicke 6 ist in den Figuren 3A bis 3D als trapezförmige Vollsicke ausgeführt, wobei die Flanken 8 und 10 der Vollsicke 6 eine, im Vergleich zu der Dicke der Lage 2, verringerte Dicke bzw. Materialstärke aufweisen. Die Flanken der Vollsicke 6 sind daher in Bezug auf die Dicke der Lage 2 verjüngt. Die als Sickenabschnitte ausgeführten Vertiefungen 18, 20 sind in den Figuren 3A bis 3D ebenfalls trapezförmig ausgeführt, wobei die Flanken der Vertiefungen 18, 20 eine im Vergleich zu der Dicke der Lage 2 verringerte Dicke bzw. Materialstärke aufweisen. Die Flanken der Vertiefungen 18, 20 sind daher in Bezug auf die Dicke der Lage 2 verjüngt.

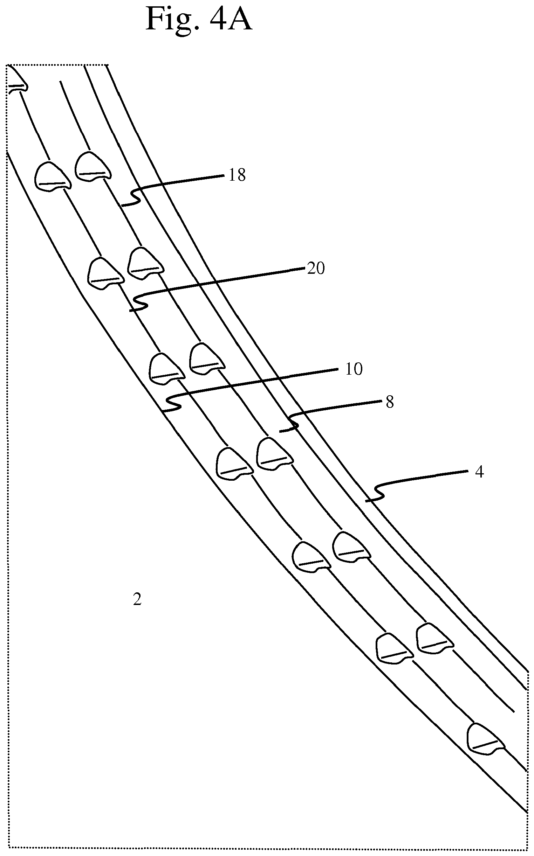

Figur 4A zeigt einen Ausschnitt einer erfindungsgemäßen Zylinderkopfdichtung für einen Verbrennungsmotor in einer perspektivischen Aufsicht. Die Vollsicke 6 verläuft in der Lage 2 und weist in Figur 4A nach unten. Zwischen der äußeren Flanke 10 und der inneren Flanke 8 der Vollsicke 6 als Vertiefung zu erkennen. Die als Sickenabschnitte ausgeführten Vertiefungen 18 und 20 bilden jeweils eine innere Reihe von Vertiefungen 18 und eine äußere Reihe von Vertiefungen 20, die sich am Grund der Sicke nach oben erheben. Innerhalb der Vollsicke 6 verläuft eine Brennraumöffnungskante 4 um eine Brennraumöffnung. Die Vertiefungen 18 und die Vertiefungen 20 der inneren bzw. äußeren Reihe sind in Figur 4A nicht gegeneinander versetzt und parallel bzw. koplanar bzw. koradial angeordnet.

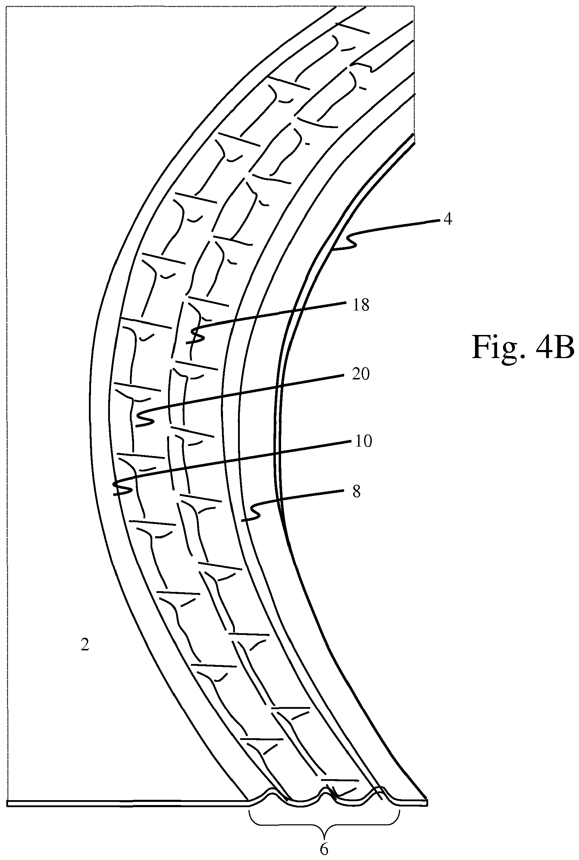

Figur 4B zeigt einen Ausschnitt einer Dichtung wie in Figur 4A von der anderen Seite, wobei die Vertiefungen 18 und die Vertiefungen 20 der inneren bzw. äußeren Reihe gegeneinander versetzt angeordnet sind. Die Vollsicke 6 ist in der Lage 2 angeordnet und weist in Figur 4B nach oben und ist zwischen der äußeren Flanke 10 und der inneren Flanke 8 der Vollsicke 6 als Erhöhung zu erkennen. Die als Sickenabschnitte ausgebildeten Vertiefungen 18 und 20 bilden jeweils eine innere Reihe von Vertiefungen 18 und eine äußere Reihe von Vertiefungen 20, die auf dem Rücken der Sicke als Vertiefungen erscheinen. Innerhalb der Vollsicke 6 verläuft eine Brennraumöffnungskante 4 um eine Brennraumöffnung.

Figur 4C ist eine Schnittansicht durch die Lage 2 der Vollsicke 6 von Figuren 4A und 4B. Die Vollsicke 6 ist in der metallischen Lage 2 mit der äußeren Flanke 10 und der inneren Flanke 8 zu erkennen. Der Schnitt verläuft von der Brennraumöffnungskante 4, die eine Brennraumöffnung umschließt, radial zu der Brennraumöffnung durch einen Bereich in denen sich eine als innerer Sickenabschnitt ausgeführte Vertiefung 18 mit einer als äußeren Sickenabschnitt ausgeführten Vertiefung 20 überlappt.

Figur 4D ist eine Schnittansicht durch die Lage 2 der Vollsicke 6 von Figuren 4A und 4B. Die Vollsicke 6 ist in der metallischen Lage 2 mit der äußeren Flanke 10 und der inneren Flanke 8 zu erkennen. Der Schnitt verläuft von der Brennraumöffnungskante 4, die eine Brennraumöffnung umschließt, radial zu der Brennraumöffnung durch einen Bereich in denen sich die als innerer Sickenabschnitt ausgeführte Vertiefung 18 erstreckt und in einem Bereich 23 zwischen zwei als äußere Sickenabschnitte ausgebildete Vertiefungen 20, weshalb die als äußere Sickenabschnitte ausgebildete Vertiefungen 20 nicht zu erkennen sind.

Die Vollsicke 6 ist in den Figuren 4A bis 4D als runde wellenförmige Vollsicke ausgeführt, wobei die Flanken 8 und 10 der Vollsicke 6 im Wesentlichen eine Dicke aufweisen, die der Dicke der Lage 2 entspricht. Es kann jedoch ebenfalls vorgesehen werden, die Flanken der Vollsicke 6 in Bezug auf die Dicke der Lage 2 verjüngt auszuführen. Die Vertiefungen 18, 20, die als Sickenabschnitte ausgearbeitet sind, sind in den Figuren 4A bis 4D ebenfalls wellenförmig ausgeführt, wobei die Dicke der Flanken der Vertiefungen 18, 20 im Wesentlichen der Dicke der Lage 2 entspricht. Es kann ebenfalls vorgesehen werden, die Flanken der Vertiefungen 18, 20 in Bezug auf die Dicke der Lage 2 verjüngt auszuführen.

Es ist anzumerken, dass die Flachdichtung der vorliegenden Erfindung ebenfalls so ausgeführt werden kann, dass beispielsweise die innere Flanke 10 der Vollsicke 6 wie in Figur 3D eckig ausgeführt ist, während die äußere Flanke 8 wie in Figur 4C rund ausgeführt wird, oder umgekehrt. Ebenso sind Kombinationen von derartigen trapezförmigen und runden Vertiefungen in einer der vorstehend beschriebenen Vollsicken möglich. Es ist ebenfalls vorgesehen, in einer Reihe von Vertiefungen 18, 20 abwechselnd runde und trapezförmige Vertiefungen einzusetzen. Es ist ebenfalls vorgesehen, in einer Reihe Vertiefungen mir verjüngten und nicht verjüngten Flanken nebeneinander zu verwenden.

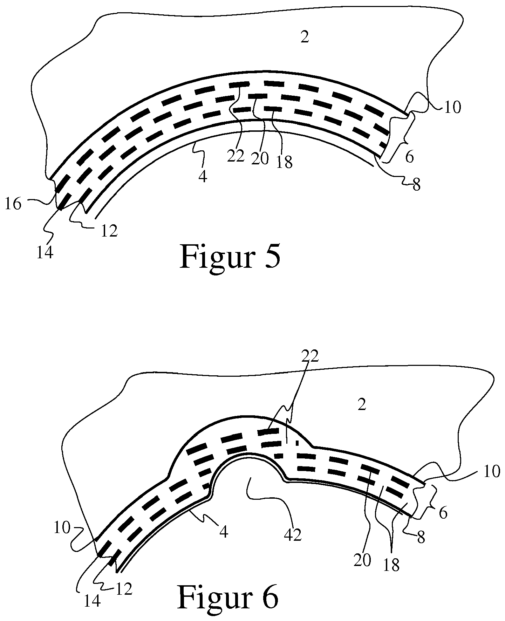

Figur 5 stellt einen Ausschnitt einer erfindungsgemäßen Flachdichtung (Zylinderkopfdichtung) mit einer erfindungsgemäßen Vollsicke 6 und den Flanken 8 und 10 in einer Aufsicht dar. Auf dem Rücken der Vollsicke 6 sind drei Reihen 12, 14, 16 von, als Sickenabschnitte ausgeformte, Vertiefungen 18, 20, 22 angeordnet, die parallel zueinander und zu der Vollsicke 6 verlaufen. Durch diese Ausführungsform kann die Sicke auch größeren Belastungen standhalten, da sie durch die drei Reihen 12, 14, 16 von Vertiefungen 18, 20, 22 besser abgestützt wird, als eine Vollsicke mit nur einer Reihe oder zwei Reihen von Vertiefungen.

Figur 6 stellt einen Ausschnitt einer erfindungsgemäßen Flachdichtung (Zylinderkopfdichtung) mit einer Vollsicke 6 mit den Flanken 8 und 10 in einer Aufsicht dar. Der Brennraumöffnung und daher auch die Brennraumöffnungskante 4 weist eine Brennraumausbuchtung 42 auf. Die Vollsicke 6 mit den Flanken 8 und 10 verläuft im Wesentlichen parallel zu der Brennraumöffnungskante 4 um die Brennraumausbuchtung 42 herum. Die Vertiefungen, die als Sickenabschnitte ausgeführt sind, können ebenfalls parallel dem Verlauf der Vollsicke folgen. In Figur 6 sind die Reihen 12, 14 von Sickenabschnitten auf Kreisbögen angeordnet, die nicht um die Brennraumausbuchtung herumgeführt sind, sondern vor der Brennraumausbuchtung 42 enden. In dem Bereich der Brennraumausbuchtung 42 sind die, auf konzentrischen Kreisbögen angeordneten Vertiefungen 18, 20 durch zusätzliche, auf konzentrischen Kreisbögen angeordnete Vertiefungen 22 weitergeführt, die sich jeweils in den Sektoren erstrecken, in denen die auf konzentrischen Kreisbögen angeordneten Vertiefungen durch die Brennraunausbuchtung 42 unterbrochen sind.

Wenn die konzentrischen Kreisbögen, auf denen die Vertiefungen 18, 20, 22 angeordnet sind, vom Brennraum aus nach außen durchnummeriert werden, werden die auf dem ersten konzentrischen Kreisbogen angeordneten Vertiefungen 18 durch die, auf dem dritten konzentrischen Kreisbogen angeordneten Vertiefungen 22 weitergeführt. Genauso werden die auf dem zweiten konzentrischen Kreisbogen angeordneten Vertiefungen 20 durch die auf dem vierten konzentrischen Kreisbogen angeordneten Vertiefungen 22 weitergeführt. Durch diese Auslegung kann jede beliebige Form des Verlaufs einer Vollsicke 6 durch entsprechend angeordnete Vertiefungen 18, 20, 22 gefüllt werden, die entweder wie in Figur 3 bzw. 5 auf konzentrischen Kreisen je nach verlauf der Vollsicke 6 auf parallelen Linien angeordnet sind.

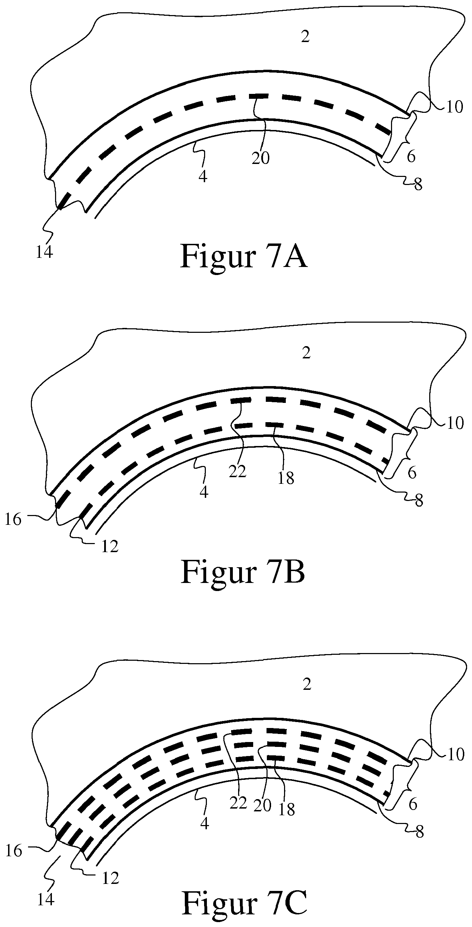

Figuren 7A bis 7C stellen Ausschnitte einer erfindungsgemäßen Flachdichtung (Zylinderkopfdichtung) mit einer Vollsicke 6 und deren Flanken 8 und 10 in einer jeweiligen Darstellung in Aufsicht dar. In Figur 7A ist auf dem Rücken der Vollsicke 6 eine Reihe 14, von, als Sickenabschnitte ausgeformten Vertiefungen 20 angeordnet, die parallel zu der Vollsicke 6 verläuft. In dieser Ausführungsform kann die Sicke auch größeren Belastungen standhalten, als eine Vollsicke ohne eine Reihe von Vertiefungen, da sie durch die Reihe 14 von Vertiefungen 20 leicht abgestützt wird.

In Figur 7B sind auf dem Rücken der Vollsicke 6 zwei Reihen 12, 16 von, als Sickenabschnitte ausgeformten Vertiefungen 18, 22 angeordnet, die parallel zu der Vollsicke 6 verlaufen. Durch diese Ausführungsform kann die Sicke noch größeren Belastungen standhalten als die in Figur 7A dargestellte Ausführungsform, da sie durch die zwei Reihen 12 und 16 von Vertiefungen 18, 22 die Vollsicke stärker abgestützt wird, als die Vollsicke von Figur 7A.

In Figur 7C sind auf dem Rücken der Vollsicke 6 drei Reihen 12, 14, 16 von, ebenfalls als Sickenabschnitte ausgeformten Vertiefungen 18, 20, 22 angeordnet, die parallel zu der Vollsicke 6 verlaufen. Durch diese Ausführungsform kann die Sicke noch weit größeren Belastungen standhalten als die, in den Figuren 7A und 7B dargestellte Ausführungsformen, da sie durch die drei Reihen 12, 14 und 16 von Vertiefungen 18, 20, 22 die Vollsicke weit stärker abgestützt wird, als die in den Figuren 7A und 7B dargestellte Ausführungsform. Die Sickenabschnitte sind in der dargestellten Ausführungsform parallel zueinander, und nicht gegeneinander versetzt angeordnet.

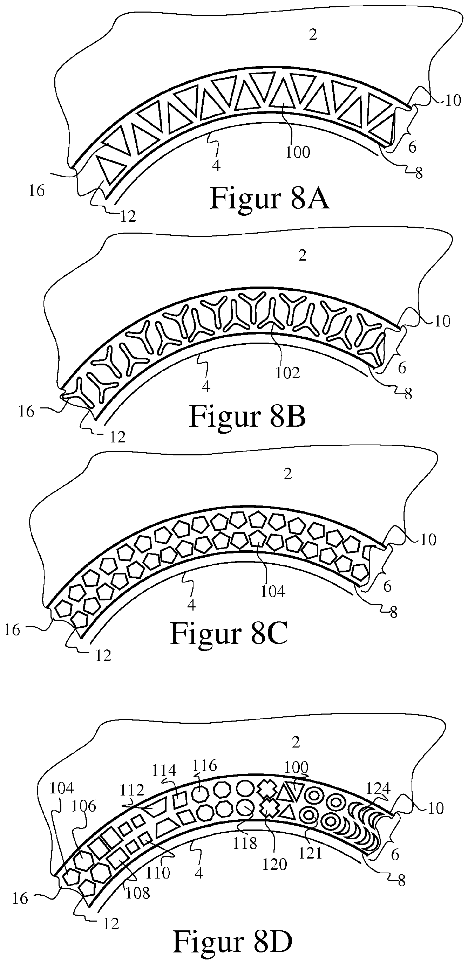

Figuren 8A bis 8D stellten Ausschnitte einer erfindungsgemäßen Zylinderkopfdichtung mit einer Vollsicke 6 und den Flanken 8 und 10 in einer jeweiligen Darstellung in Aufsicht dar.

In der Figur 8A sind auf dem Rücken der Vollsicke 6 zwei Reihen 12, 16 von, als Dreiecke ausgeformten Vertiefungen 100 angeordnet, die parallel zu der Vollsicke 6 verlaufen. Die Spitzen der dreieckigen Vertiefungen 100 der äußeren Reihe 16 weisen nach innen, und die Spitzen der dreieckigen Vertiefungen 100 der inneren Reihe 12 weisen nach außen. Die nicht-länglichen Vertiefungen 100 bilden damit zwei parallel verlaufende Reihen von Vertiefungen, die so dicht beieinanderliegen, dass sie auch als eine einzelne Reihe von Vertiefungen interpretiert werden könnten.

Figur 8B entspricht im Wesentlichen der Figur 8A, mit dem Unterschied, dass die Vertiefungen nicht dreieckig sind, sondern Y-Sicken 102 bilden. Werden jeweils nur die Kreuzungspunkte der Y-Sicken 102 betrachtet, ergeben sich zwei Reihen nicht-länglicher zueinander versetzt angeordneter Vertiefungen 100. Es ist jedoch ebenfalls möglich, nur eine Reihe von Y-Sicken 102 zu erkennen, wenn man jeweils nur die äußeren und inneren Begrenzungen der jeweiligen Reihen von Y-Sicken 102 betrachtet, überlappen sich diese größtenteils.

Die Darstellung von Figur 8C entspricht im Wesentlichen denen der Figuren 8A und 8B. Im Gegensatz zu den dreieckigen Vertiefungen 100 und den Y-Sicken 102 bilden die Vertiefungen Fünfecke 104. Die nicht-länglichen Fünfecke 104 weisen jeweils mit einer Spitze abwechselnd nach innen bzw. nach außen. Die beiden Reihen 12, 16 von fünfeckförmigen Vertiefungen 104 sind klar voneinander getrennt. Die fünfeckförmigen Vertiefungen 104 sind jeweils in Bezug auf die entsprechende Vertiefung der andren Reihe nicht versetzt angeordnet. Es ist ebenfalls möglich, fünfeckige Vertiefungen zu verwenden, die nicht regelmäßig geformt sind, um eine gleichmäßigere Ausfüllung der Vollsicke zu erreichen.

In Figur 8D stellt eine Sammlung verschiedener Formen von Vertiefungen dar, aus denen jeweils eine Reihe von Vertiefungen zusammengesetzt werden kann. Die innere und die äußere Reihe 12, 16 umfassen nacheinander fünfeckige Vertiefungen 104, sechseckige Vertiefungen 106, rechteckige Vertiefungen 108, quadratische Vertiefungen 110, sowie trapezförmige Vertiefungen 112 und rautenförmige Vertiefungen 114. Weiter umfassen die Reihen 12 und 16 achteckige Vertiefungen 116m runde Vertiefungen bzw. Punktsicken 118, Kreuzsicken 120, dreieckige Vertiefungen 100, ringförmige Vertiefungen bzw. Ringsicken 121 sowie halbmondförmige Vertiefungen bzw. Halbmondsicken 124. Die beiden Reihen 12, 16 sind auch hier klar voneinander getrennt. Es ist klar, dass auch jede einzelne Reihe von Vertiefungen auch nur einen Typ der obengenannten Vertiefungen umfassen kann. Es ist beispielsweise möglich, die innere Reihe von Vertiefungen aus ringförmigen Vertiefungen bzw. Ringsicken 121 zu bilden und die äußere Reihe von Vertiefungen aus Punktsicken 118 zu bilden. Es ist ebenfalls möglich, wie dargestellt innerhalb einer Reihe von Vertiefungen verschiedene Arten von und Größen von Vertiefungen zu wählen und beispielsweise von Punktsicken über achteckige Vertiefungen zu Ringsicken 121 zu wechseln.

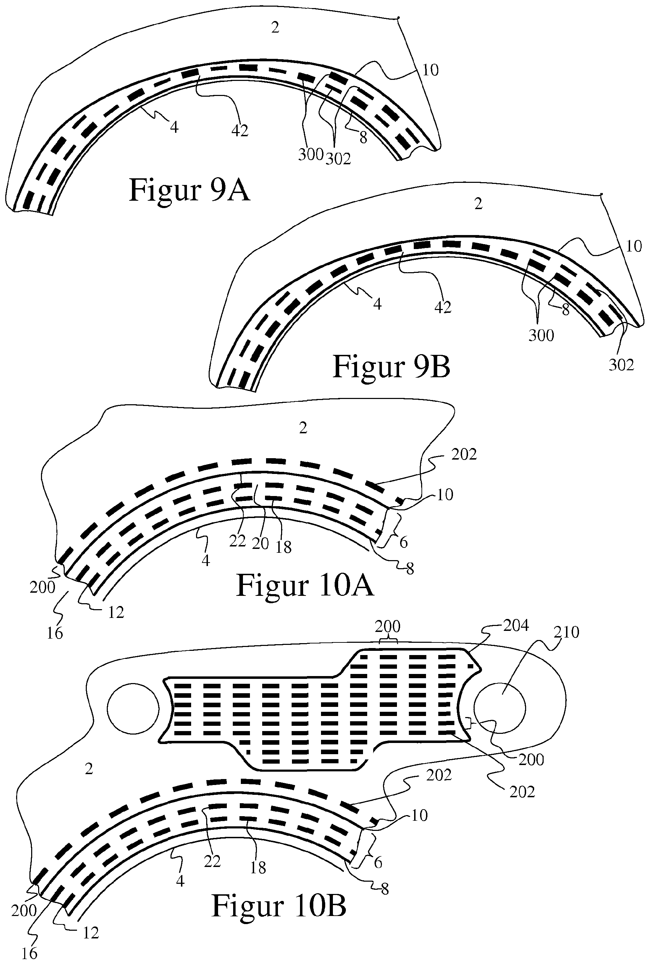

Figuren 9A und 9B stellen jeweils einen Ausschnitt zweier verschiedener Ausführungsformen einer erfindungsgemäßen Flachdichtung dar.

Figuren 9A und 9B stellen jeweils einen Ausschnitt einer erfindungsgemäßen Flachdichtung (Zylinderkopfdichtung) mit einer Vollsicke 6 mit den Flanken 8 und 10 in einer Aufsicht dar. Die Vollsicke 6 ist in dem dargestellten Bereich schmaler ausgeführt, wie es beispielsweise bei Zylinderkopfdichtungen zwischen Brennraumöffnungen von Mehrzylindermotoren erforderlich sein kann. Die Vollsicke 6 weist einen Schmalbereich auf, in dem die äußere Flanke 10 von der Kreisform in Richtung der inneren Flanke 8 abweicht. Die innere Flanke verläuft im Wesentlichen parallel zu der Brennraumöffnungskante 4 um die Brennraumausbuchtung 42 herum. Die Vertiefungen, der inneren Reihe sind als Sickenabschnitte ausgeführt, und verlaufen parallel zu der inneren Flanke 8 der Vollsicke 6. Die äußere Reihe von Vertiefungen verlaufen größtenteils parallel zu der äußeren Flanke 10 der Vollsicke 6, endet jedoch vor dem Schmalbereich. Die äußere Reihe von Vertiefungen ist im Schmalbereich in einem Sektor unterbrochen.

In Figur 9A sind die Vertiefungen der inneren Reihe und die äußere Reihe als Sickenabschnitte ausgeführt. Beide Reihen umfassen jeweils abwechselnd breite Vertiefungen 300 und schmale Vertiefungen 302. Die Vertiefungen der inneren Reihe und der äußeren Reihe verlaufen parallel zueinander, und nicht gegeneinander versetzt.

In Figur 9B sind die Vertiefungen der inneren Reihe und die äußere Reihe als Sickenabschnitte ausgeführt. Die Vertiefungen der inneren Reihe umfassen dabei nur breite Vertiefungen 300. Die Vertiefungen der äußeren Reihe umfassen dabei nur schmale Vertiefungen 302. Auch in Fig. 9B sind die Vertiefungen der inneren Reihe und der äußeren Reihe parallel zueinander ausgerichtet, d. h. sie sind nicht gegeneinander versetzt angeordnet und überlappen sich aus Sicht des Zylindermittelpunkts nicht.

Durch diesen Aufbau kann die Abstützung der Vollsicke gezielt gesteuert werden. Es ist insbesondere beabsichtigt, die Höhe bzw. die Tiefe der Vertiefungen zusammen mit der Breite bzw. Länge der Vertiefungen zu variieren, um eine gewünschte Abstützung der Vollsicke 6 zu erreichen.

Figuren 10A und 10B stellen Ausschnitte einer erfindungsgemäßen Flachdichtung (Zylinderkopfdichtung) mit einer Vollsicke 6 mit deren Flanken dar. Die in den Figuren 10A und 10B dargestellten Ausführungsformen weisen zusätzlich mindestens eine Reihe von Vertiefungen auf, die nicht zwischen den Flanken einer Vollsicke angeordnet sind.

Die in Figur 10A dargestellte Dichtung entspricht im Wesentlichen der Dichtung, wie sie in Figur 7C dargestellt ist, mit einer Vollsicke, die durch zwei Reihen 10, 16 von Vertiefungen 18, 22 abgestützt wird. Zusätzlich ist in Figur 10 eine Reihe 200 von Vertiefungen 202 angeordnet, die jedoch in die andere Richtung weisen, und hier nicht den Rücken der Vollsicke abstützen, sondern die Basis der Vollsicke dagegen abstützen, dass sie nach oben ausweichen kann. Die Vertiefungen 18 und 22 sind entgegen der Richtung, in der die Vollsicke ausgeformt ist, in die Lage der Dichtung eingepresst, um sie zu stützen. Die Vertiefungen 202 sind entgegen der Richtung, in der die Vollsicke ausgeformt ist, in die Lage der Dichtung eingepresst, um sie zu stützen. Die Vertiefungen 202 sind in die gleiche Richtung wie die Vollsicke 6 ausgeformt bzw. eingepresst, um den Fußpunkt der Flanke 10 der Vollsicke 6 in entgegengesetzter Richtung zusätzlich abzustützen.

In Figur 10B ist stellt einen größeren Ausschnitt der Dichtung aus Figur 10A dar, die zusätzlich mit einem "Hinterlandstopper" versehen ist. In Figur 10B sind weitere zusätzliche Reihen 200 von Vertiefungen 202 auf der Dichtung angeordnet, die nicht zwischen den Flanken einer Vollsicke 6 angeordnet sind. In dem Bereich 204 sind mehrere hintereinander und nebeneinander angeordnete Vertiefungen 202 entlang mehrerer, im Wesentlichen parallel verlaufender Linien 200 angeordnet. Der Bereich 204 kann von einer Halbsicke umgeben sein, und sich beispielsweise zwischen zwei Bolzenlöchern 210 erstrecken. Die Vertiefungen auf benachbarten Linien können wie Dargestellt jeweils parallel bzw. nicht gegeneinander versetzt angeordnet sin. Die Vertiefungen auf benachbarten Linien können jeweils gegeneinander versetzt angeordnet sein. Dadurch können die einzelnen Vertiefungen eine Fläche auf einer Lage der metallischen Flachdichtung füllen, die im Prinzip beliebig geformt sein kann. Es ist ebenfalls möglich, die Reihen 200 von Vertiefungen 202 entlang einer Kurve anzuordnen.

Die in den Figuren 2 bis 6 dargestellten Dichtungen können mit einem Werkzeug hergestellt werden, das zum großen Teil auf einer Drehmaschine gefertigt werden kann.

Es wird weiter darauf hingewiesen, dass auch alle Kombinationen der Merkmale der Figuren 2 bis 10b als offenbart zu erachten sind.

## Patentansprüche

1. Metallische Flachdichtung mit Vollsicke, mit mindestens einer metallischen Lage (2), wobei die metallische Dichtung mindestens eine Vollsicke (6) umfasst, die in mindestens einer Lage (2) der metallischen Dichtung ausgebildet ist, wobei die Vollsicke (6) zwei einander gegenüberliegende Flanken (8, 10) umfasst,
wobei die Dichtung zwischen den zwei Flanken (8, 10) in Umfangsrichtung der Vollsicke (6) mindestens eine Reihe (12, 14, 16) einander benachbarter, in die mindestens eine metallische Lage (2) eingeprägter Sickenabschnitte (18, 20, 22) umfasst, die jeweils eine Einwölbung auf der einen Seite der Lage und eine Auswölbung auf der anderen Seite der Lage bilden, wobei die Sickenabschnitte (18, 20, 22) jeweils mit der Vollsicke (6) eine einstückige Kontur bilden und die Auswölbungen der Sickenabschnitte (18, 20, 22) zu der Auswölbung der Vollsicke (6) entgegengesetzt ausgerichtet sind;
wobei die Sickenabschnitte (18, 20, 22) die Vollsicke abstützen, so dass ein vollständiges Plattdrücken der Vollsicke verhindert werden kann;
**dadurch gekennzeichnet, dass**
die Dichtung mindestens zwei benachbarte parallel verlaufende Reihen (12, 14, 16) von Vertiefungen (18, 20, 22) umfasst, wobei jede Reihe mehrere Vertiefungen (18, 20, 22) umfasst;
wobei die Vertiefungen (20) in einer Reihe (14) gegenüber den Vertiefungen (18, 22) in einer benachbarten Reihe (12, 16) versetzt angeordnet sind;
wobei die Höhe, die Breite und die Länge der Vertiefungen (18, 20, 22) zwischen benachbarten Reihen (12, 14, 16) variieren; und
wobei die Vollsicke (6) und die Reihen (12, 14, 16) von Vertiefungen (18, 20, 22) zumindest teilweise auf einem Kreisbogen verlaufen.

2. Metallische Flachdichtung gemäß Anspruch 1, wobei die auf einem Kreisbogen angeordneten Vertiefungen (18, 20, 22) im Wesentlichen eine Länge aufweisen, die einem Mittelpunktswinkel zwischen 2° und 4° entspricht.

3. Metallische Flachdichtung gemäß einem der vorstehenden Ansprüche, wobei die Höhe und/oder die Breite der Vertiefungen (18, 20, 22) in einer Reihe von Vertiefungen (18, 20, 22) sich entlang der Reihe verändern.

4. Metallische Flachdichtung gemäß einem der vorstehenden Ansprüche, wobei die Vertiefungen (18, 20, 22) im Querschnitt wellenförmig sind.

5. Metallische Flachdichtung gemäß einem der vorstehenden Ansprüche, wobei die Vertiefungen (18, 20, 22) im Bereich ihrer Flanken im Vergleich zu der Dicke der metallischen Lage verjüngt sind.

6. Metallische Flachdichtung gemäß einem der vorstehenden Ansprüche, wobei die Vertiefungen (18, 20, 22) im Querschnitt trapezförmig sind.

7. Metallische Flachdichtung gemäß einem der vorstehenden Ansprüche, weiter umfassend mindestens eine Durchgangsöffnung, wie eine Brennraumöffnung, die von der Vollsicke (6) und Reihen von Vertiefungen (18, 20, 22) umschlossen ist.

8. Metallische Flachdichtung gemäß einem der vorstehenden Ansprüche, umfassend mindestens eine weitere Reihe von Vertiefungen (200, 202), die nicht zwischen den Flanken einer Vollsicke angeordnet sind.

9. Metallische Flachdichtung gemäß einem der vorstehenden Ansprüche, wobei die Vertiefungen als Punktsicke, Y-, X, V, Kreuz-, Stern oder Drei-, Vier-, Fünf- oder Sechseckvertiefungen ausgeführt sind.

10. Metallische Flachdichtung gemäß einem der vorstehenden Ansprüche, wobei die metallische Flachdichtung eine Zylinderkopfdichtung ist.

11. Press/ Prägewerkzeug, besonders entwickelt zur Herstellung einer metallischen Flachdichtung mit Vollsicke gemäß einem der vorstehenden Ansprüche.

## Claims

1. A metallic flat gasket with full bead, with at least one metallic layer (2), wherein the metallic gasket comprises at least one full bead (6), which is formed in at least one layer (2) of the metallic gasket, wherein the full bead (6) comprises two flanks (8, 10) lying opposite one another,
wherein the gasket comprises, between the two flanks (8, 10) in circumferential direction of the full bead (6), at least one row (12, 14, 16) of bead sections (18, 20, 22) adjacent to one another and embossed in the at least one metallic layer (2), said bead sections each forming a concavity on the one side of the layer and a convexity on the other side of the layer, wherein the bead sections (18, 20, 22) each form an integral contour with the full bead (6) and the convexities of the bead sections (18, 20, 22) are orientated in the opposite direction with respect to the convexity of the full bead (6);
wherein the bead sections (18, 20, 22) support the full bead, so that complete flattening of the full bead can be prevented;
**characterized in that**
the gasket comprises at least two adjacent rows (12, 14, 16) of depressions (18, 20, 22) running in parallel, wherein each row comprises several depressions (18, 20, 22);
wherein the depressions (20) in a row (14) are disposed offset with respect to the depressions (18, 22) in an adjacent row (12, 16);
wherein the height, the width and the length of the depressions (18, 20, 22) vary between adjacent rows (12, 14, 16); and
wherein the full bead (6) and the rows (12, 14, 16) of depressions (18, 20, 22) run at least partially on a circular arc.

2. The metallic flat gasket according to claim 1, wherein the depressions (18, 20, 22) disposed on a circular arc essentially have a length which corresponds to a centre-point angle between 2° and 4°.

3. The metallic flat gasket according to any one of the preceding claims, wherein the height and/or the width of the depressions (18, 20, 22) in a row of depressions (18, 20, 22) change along the row.

4. The metallic flat gasket according to any one of the preceding claims, wherein the depressions (18, 20, 22) are corrugated in cross-section.

5. The metallic flat gasket according to any one of the preceding claims, wherein the depressions (18, 20, 22) are tapered in the region of their flanks compared to the thickness of the metallic layer.

6. The metallic flat gasket according to any one of the preceding claims, wherein the depressions (18, 20, 22) are trapezoidal in cross-section.

7. The metallic flat gasket according to any one of the preceding claims, further comprising at least one through-hole, such as a combustion chamber aperture, which is surrounded by the full bead (6) and rows of depressions (18, 20, 22).

8. The metallic flat gasket according to any one of the preceding claims, comprising at least one further row of depressions (200, 202) which are not disposed between the flanks of a full bead.

9. The metallic flat gasket according to any one of the preceding claims, wherein the depressions are constituted as a point-like bead, Y-, X-, V-, cross-shaped, star-shaped or triangular, rectangular, pentagonal or hexagonal depressions.

10. The metallic flat gasket according to any one of the preceding claims, wherein the metallic flat gasket is a cylinder head gasket.

11. A pressing/embossing tool specifically designed for producing a metallic flat gasket with full bead according to any one of the preceding claims.

## Revendications

1. Joint métallique plat, doté d'une moulure pleine, avec au moins une couche métallique (2), le joint métallique comprenant au moins une moulure pleine (6) qui est conçue dans au moins une couche (2) du joint métallique, la moulure pleine (6) comprenant deux flancs (8, 10) mutuellement opposés,
le joint comprenant entre les deux flancs (8, 10) de la moulure pleine (6) au moins une rangée (12, 14, 16) de segments de moulure (18, 20, 22) voisins les uns des autres, gaufrés dans l'au moins une couche métallique (2), qui forment chacune une concavité sur l'un des côtés de la couche et une convexité sur l'autre côté de la couche, les segments de moulure (18, 20, 22) formant chaque fois avec la moulure pleine (6) un contour en monobloc et les convexités des segments de moulure (18, 20, 22) étant orientées à l'inverse de la convexité de la moulure pleine (6) ;
les segments de moulure (18, 20, 22) soutenant la moulure pleine, de sorte à permettre d'empêcher un aplatissement complet de la moulure pleine ;
**caractérisé en ce que**
le joint comporte au moins deux rangées (12, 14, 16) voisines s'écoulant en parallèle de creux (18, 20, 22), chaque rangée comprenant plusieurs creux (18, 20, 22) ;
les creux (20) dans une rangée (14) étant placés en déport par rapport aux creux (18, 22) dans une rangée (12, 14, 16) voisine ;
la hauteur, la largeur et la longueur des creux (18, 20, 22) variant entre des rangées (12, 14, 16) voisines ; et
la moulure pleine (6) et les rangées (12, 14, 16) de creux {18, 20, 22) s'étendant au moins en partie sur un arc de cercle.

2. Joint plat métallique selon la revendication 1, les creux (18, 20, 22) placés sur un arc de cercle présentant essentiellement une longueur qui correspond à un angle au centre compris entre 2° et 4°.

3. Joint plat métallique selon l'une quelconque des revendications précédentes, la hauteur et/ou la largeur des creux (18, 20, 22) dans une rangée de creux (18, 20, 22) se modifiant le long de la rangée.

4. Joint plat métallique selon l'une quelconque des revendications précédentes, les creux (18, 20, 22) présentant dans la section transversale une forme ondulée.

5. Joint plat métallique selon l'une quelconque des revendications précédentes, dans la région de leurs flancs, les creux (18, 20, 22) étant rétrécis en comparaison de l'épaisseur de la couche métallique.

6. Joint plat métallique selon l'une quelconque des revendications précédentes, les creux (18, 20, 22) présentant dans la section transversale une forme trapézoïdale.

7. Joint plat métallique selon l'une quelconque des revendications précédentes, comprenant par ailleurs au moins un orifice de passage, comme un orifice de chambre d'explosion, qui est entouré par la moulure pleine (6) et par des rangées de creux (18, 20, 22).

8. Joint plat métallique selon l'une quelconque des revendications précédentes, comprenant au moins une rangée supplémentaire de creux (200, 202), qui ne sont pas placés entre les flancs d'une moulure pleine.

9. Joint plat métallique selon l'une quelconque des revendications précédentes, les creux étant réalisés sous la forme de moulure ponctuelle, de creux en forme de Y, de X, de V, en forme de croix ou d'étoiles, en forme de triangles, de rectangles, de pentagones ou d'hexagones.

10. Joint plat métallique selon l'une quelconque des revendications précédentes, le joint plat métallique étant un joint de culasse.

11. Outil de pressage, de gaufrage, particulièrement développé pour la fabrication d'un joint plat métallique doté d'une moulure pleine selon l'une quelconque des revendications précédentes.
